# EUROPÄISCHE PATENTANMELDUNG

(11) **EP 0 937 605 A1**
(43) Veröffentlichungstag der Anmeldung: **25.08.1999**
(21) Anmeldenummer: 99102111.4
(22) Anmeldetag: 03.02.1999
(51) Int. Cl.: B60N 2/36, B60R 7/04

(54) **Sitz für ein Kraftfahrzeug**

(30) Priorität: 20.02.1998 DE 19807319
(71) Anmelder: Bayerische Motoren Werke Aktiengesellschaft, 80788 München (DE)
(72) Erfinder: Koschyk, Marcus, 85305 Jetzendorf (DE)

(57) **Zusammenfassung**

Das Sitzkissen (2) eines Rücksitzes (1) für ein Kraftfahrzeug ist in einen vorderen und einen hinteren Abschnitt (10 bzw. 11) unterteilt. Während der hintere Abschnitt (11) feststehend angeordnet ist, kann der vordere Abschnitt (10) über eine im Bereich der Sitzvorderkante liegende Schwenkachse (12) so in den Fondfußraum (13) verschwenkt werden, daß ein Staufach (14) unterhalb des Sitzkissens (2) zugänglich wird. Durch das Verschwenken des vorderen Abschnittes (10) wird zudem ein Freiraum (19) für eine in Richtung auf das Sitzkissen (2) horizontal umgeklappte Rückenlehne (3) geschaffen, so daß die Rückenlehne (3) in eine annähernd waagrechte Position überführt werden kann.

## Beschreibung

Die Erfindung betrifft einen Sitz für ein Kraftfahrzeug mit einem Sitzkissen sowie einer Rückenlehne.

Aufgabe der Erfindung ist es, einen Sitz für ein Kraftfahrzeug derart weiterzubilden, daß sich erweiterte Nutzungsmöglichkeiten ergeben.

Diese Aufgabe wird durch die Merkmale des Anspruchs 1 gelöst. Durch die Unterteilung des Sitzkissens in zwei Abschnitte wird die Möglichkeit geschaffen, den vorderen Abschnitt des Sitzkissens so in den Fußraum des Kraftfahrzeuges zu verschwenken, daß ein unterhalb des Sitzkissens befindliches Staufach zugänglich wird (Anspruch 2) und/oder die Rückenlehne in eine weitestgehend horizontale Lage in Richtung auf das Sitzkissen verschwenkbar ist (Anspruch 3).

Aus der EP 0 718 146 A1 ist zwar ein Sitz für ein Kraftfahrzeug bekannt, bei dem das Sitzkissen in einen vorderen und einen hinteren Abschnitt unterteilt ist. Die beiden Abschnitte sind über ein mittleres Gelenk miteinander verbunden. Bei der bekannten Sitzanordnung kann der vordere Abschnitt des Sitzkissens jedoch nicht alleine vor den Sitz verschwenkt werden. Es ist lediglich eine Verlagerung des gesamten Sitzkissens möglich, das über eine an der Sitzvorderkante liegende Schwenkachse um 270 ° verschwenkt wird, wobei durch das mittlere Gelenk der vordere Abschnitt gegensinnig eingeklappt wird. Die bekannte Sitzanordnung ist aufwendig in ihrem Aufbau und erfordert zusätzliche Maßnahmen, um eine ausreichende Stabilität des Sitzkissens zu gewährleisten.

Darüber hinaus ist aus der EP 0 591 142 B1 ein Sitz für ein Kraftfahrzeug bekannt, bei dem das Sitzkissen einen vorderen schwenkbaren Abschnitt aufweist. Der schwenkbare Abschnitt kann jedoch nicht in einem Bereich vor und unterhalb des Sitzkissens verlagert werden. Vielmehr ist der vordere Abschnitt derart schwenkbar, daß er über die Oberkante des Sitzkissens hinaussteht und somit eine Haltevorrichtung bildet, um das Herunterfallen bzw. Herunterrutschen von auf der Oberfläche des Sitzkissens abgelegten Gegenständen zu verhindern.

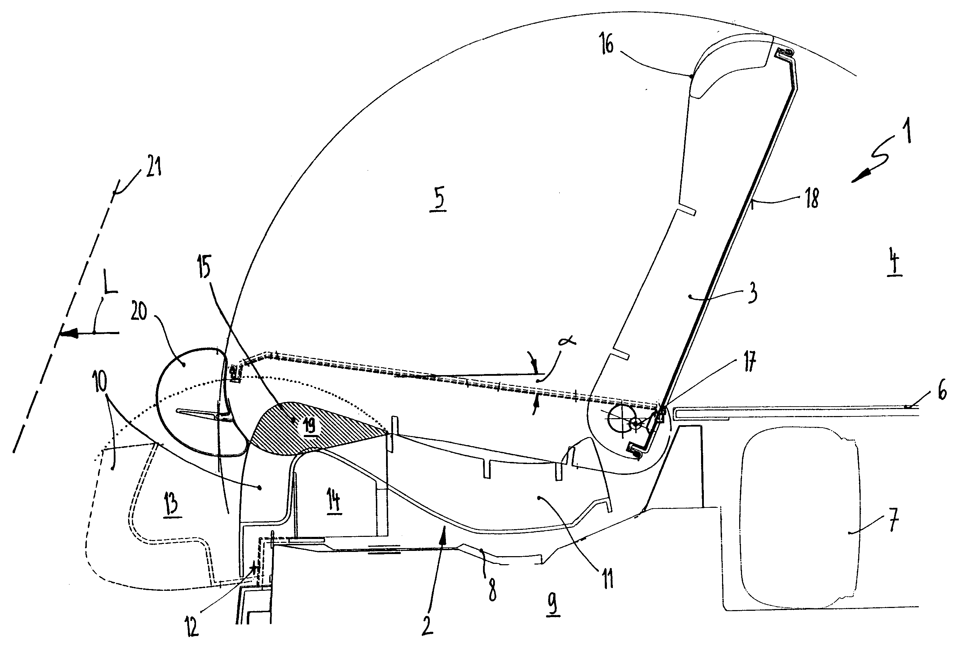

Ein mögliches Ausführungsbeispiel der Erfindung ist in der Zeichnung dargestellt und wird nachfolgend näher erläutert. Die einzige Figur zeigt einen Ausschnitt aus einem Kraftfahrzeug mit einem erfindungsgemäßen Sitz im Querschnitt.

Ein in seiner Gesamtheit mit 1 bezeichneter Rücksitz eines Kraftfahrzeuges weist ein Sitzkissen 2 sowie eine umklappbare Rückenlehne 3 auf. Durch das Verschwenken der Rückenlehne 3 kann ein Gepäckraum 4 in Richtung des Fahrzeuginnenraums 5 erweitert werden. Der Gepäckraum 4 erstreckt sich oberhalb eines Abdeckbodens 6, unter dem sich ein Reserverad 7 befindet. Der Rücksitz 1 ist an der Oberseite eines Bodenbleches 8 angeordnet. Unterhalb des Bodenbleches 8 befindet sich ein Bereich 9, in dem beispielsweise ein Kraftstofftank untergebracht ist.

Das Sitzkissen 2 des Rücksitzes 1 ist in einen vorderen sowie einen hinteren Abschnitt 10 bzw. 11 unterteilt. Der vordere Abschnitt 10 ist über eine Schwenkachse 12 schwenkbar am Bodenblech 8 gelagert. Der hintere Abschnitt 11 des Sitzkissens 2 ist starr mit dem Bodenblech 8 verbunden.

Der vordere Abschnitt 10 des Sitzkissens 2 kann in einem Bereich 13 vor und unterhalb des Sitzkissens 2 verschenkt werden, wie mit gestrichelten Linien dargestellt. Durch die Verschwenkung des vorderen Abschnittes in den Bereich 13, der den Fußraum für einen Fondpassagier darstellt, ergibt sich eine Reihe von Vorteilen:

In vielen Fällen liegt aufgrund der Gestalt des Bodenbleches 8, die sich an der Form des darunterliegenden Kraftstofftankes orientiert, im Bereich der Rücksitze 1 ein nicht genutzter Raum vor, der erfindungsgemäß durch ein Staufach 14 belegt werden kann. Dieses Staufach 14 erstreckt sich über zumindest einen größeren Teil der Breite des Fahrzeuges und kann damit längliche Gegenstände, die ansonsten im Fahrzeug nicht oder nur schwer unterzubringen sind, aufnehmen. Als Beispiele für derartige längliche Gegenstände seien stellvertretend Regenschirme oder ein abgenommenes, aufgewickeltes Trennetz zur Unterteilung von Fahrzeuginnenraum 5 und Gepäckraum 4 genannt. Das Staufach 14 ist in der eingeklappten Normallage des vorderen Abschnittes 10 nicht sichtbar und eignet sich damit auch für die Unterbringung von (Wert-)Gegenständen, die von außerhalb des Fahrzeuges nicht einsehbar sein sollen. Außerdem ist das Staufach 14 von den vorderen Sitzen des Fahrzeuges aus gut erreichbar.

Ein weiterer Vorteil der erfindungsgemäßen Rücksitzanordnung ergibt sich daraus, daß durch das Verschwenken des vorderen Abschnittes 10 des Sitzkissens 2 in den Fondfußraum 13 die Rückenlehne 3 in eine annähernd horizontale Position überführt werden kann. Die Kontur von Sitzen weist allgemein wie auch im besonderen bei dem dargestellten Rücksitz 1 sowohl im vorderen Bereich des Sitzkissens 2 als auch im oberen Bereich der Rückenlehne 3 jeweils einen Wulst 15 bzw. 16 auf. Bei einer Klappung der Rückenlehne 3 in Richtung auf das Sitzkissen 2 kommen die Wülste 15 und 16 so übereinander zu liegen, daß eine horizontale Position der Rückseite 18 der Rückenlehne 3 nicht erreichbar ist. Als Nachteil hieraus ergibt sich, daß der Abdeckboden 6 nicht eben weitergeführt werden kann. Somit ergibt sich ein unerwünscht großer Winkel zwischen dem horizontal verlaufenden Abdeckboden 6 und der Rückseite 18 der Rückenlehne 3.

Durch das Verschwenken des vorderen Abschnittes 10 des Sitzkissens 2 wird ein Freiraum 19 (schraffiert dargestellt) für den Wulst 16 der Rückenlehne 3 geschaffen, so daß die Rückenlehne 3 in eine annähernd waagrechte Position verschwenkt werden kann. Der Winkel α, den die Rückseite 18 der Rückenlehne 3 mit einer Horizontalen einschließt, kann dadurch gegenüber bekannten Fahrzeugsitzen deutlich verringert werden.

Der erfindungsgemäße Sitz 1 weist darüber hinaus Vorteile gegenüber einem Sitz mit einer sogenannten Doppelklappung" auf, wie er beispielsweise in der DE 196 13 220 A1 beschrieben ist. Bei der 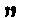 Doppelklappung" wird das gesamte Sitzkissen über eine Schwenkachse an seiner Vorderseite in eine aufrechte Position verlagert und nachfolgend die Rückenlehne waagrecht umgeklappt. Die bekannten Nachteile einer derartigen Doppelklappung, nämlich das notwendige Entfernen der Kopfstützen sowie die verringerte Ladelänge aufgrund des aufrecht verschwenkten Sitzkissens, werden durch den erfindungsgemäßen Sitz 1 vermieden: Zum einen kann die Kopfstütze 20 in ihrer in die Rückenlehne 3 eingesteckten Position verbleiben. Andererseits bleibt durch die Klappung lediglich des vorderen Abschnittes 10 des Rücksitzes 1 eine Ladelänge L bis zur Rückseite 21 eines angedeuteten Vordersitzes erhalten. Außerdem ergibt sich durch die annähernd waagrechte Rückseite 18 der Rückenlehne 3 eine größere Ladehöhe.

Wie aus der Darstellung der Zeichnung hervorgeht, ist das Sitzkissen 2 etwa im Verhältnis 1: 2 (vorderer Abschnitt 10 : hinterer Abschnitt 11) unterteilt. Die einfache Schwenkachse 12 an der vorderen unteren Kante des Abschnittes 10 ist kostengünstig herzustellen und beansprucht nur wenig Bauraum. Durch den fest angeordneten hinteren Abschnitt 11 zeichnet sich das Sitzkissen 2 zudem durch hohe Stabilität und guten Sitzkomfort aus.

Ein weiter Vorteil ergibt sich dadurch, daß der vordere Abschnitt 10 des Sitzkissens 2 durch Lösen der Schwenkachse 12 mit geringem Aufwand ausgetauscht werden kann, wenn er beispielsweise verschlissen oder beschädigt ist.

## Patentansprüche

1. Sitz für ein Kraftfahrzeug, mit einem Sitzkissen sowie einer Rückenlehne, dadurch gekennzeichnet, daß das Sitzkissen (2) in einen vorderen und einen hinteren Abschnitt (10 bzw. 11) unterteilt ist, wobei der vordere Abschnitt (10) über eine im Bereich der Sitzvorderkante liegende Schwenkachse (12) in einen Fußraum (13) vor dem Sitz (1) und unterhalb der Oberkante des Sitzkissens (2) verschwenkbar ist.

2. Sitz nach Anspruch 1,
dadurch gekennzeichnet, daß unterhalb des vorderen Abschnitts (10) des Sitzkissens (2) ein Staufach (14) vorgesehen ist, das mit dem Verschwenken des vorderen Abschnittes (10) zugänglich wird.

3. Sitz nach Anspruch 1 und/oder 2,
dadurch gekennzeichnet, daß der Sitz ein Rücksitz (1) ist, mit einer Rückenlehne (3), die an ihrem dem Sitzkissen (2) zugewandten Endabschnitt schwenkbar gelagert ist, wobei die Rückenlehne (3) nach dem Verschwenken des vorderen Abschnitts (10) des Sitzkissens (2) in den Fußraum (13) in eine zumindest annähernd horizontale Position oberhalb des Sitzkissens (2) verschwenkbar ist.
